# EUROPÄISCHE PATENTANMELDUNG

(11) **EP 3 584 029 A1**
(43) Veröffentlichungstag der Anmeldung: **25.12.2019**
(21) Anmeldenummer: 19170997.1
(22) Anmeldetag: 25.04.2019
(51) Int. Cl.: B23K 11/24, B23K 11/25

(54) **WIDERSTANDSSCHWEISSVORRICHTUNG UND WIDERSTANDSSCHWEISSVERFAHREN ZUM WIDERSTANDSSCHWEISSEN VON MINDESTENS EINEM BAUTEIL**

(30) Priorität: 20.06.2018 DE 102018209983
(71) Anmelder: Robert Bosch GmbH, 70442 Stuttgart (DE)
(72) Erfinder: Scholz, Reinhard, 64711 Erbach (DE)
(74) Vertreter: Thürer, Andreas

(57) **Zusammenfassung**

Es ist eine Widerstandsschweißvorrichtung (2; 3) und ein Widerstandsschweißverfahren zum Widerstandsschweißen von mindestens einem Bauteil (5, 6) bereitgestellt. Die Widerstandsschweißvorrichtung (2; 3) umfasst ein Schweißwerkzeug (10) mit mindestens einer Schweißelektrode (11, 12), welche zum Schweißen mit dem mindestens einen Bauteil (5, 6) zu kontaktieren ist, mindestens einen Schweißtransformator (30) zum Zuführen eines elektrischen Schweißstroms (I₂) zu dem Schweißwerkzeug (10) beim Schweißen des mindestens einen Bauteils (5, 6), eine Reihenschaltung aus zwei Transistoren (41, 42; 43, 44), die zwischen das Schweißwerkzeug (10) und einen Ausgang des Schweißtransformators (30) geschaltet sind, wobei die Polarität des einen Transistors (42; 44) der Reihenschaltung gegenüber der Polarität des anderen Transistors (41; 43) der Reihenschaltung gedreht ist, und eine Steuereinrichtung (20) zum Schalten der Reihenschaltung aus zwei Transistoren (41, 42; 43, 44) während einer umrichtergesteuerten Schweißzeit (T₁) in einer ersten Betriebsart (B₁) und zum Schalten der Reihenschaltung aus zwei Transistoren (41, 42; 43, 44), am Ende der umrichtergesteuerten Schweißzeit (T₁) für eine vorbestimmte Zeitdauer (T₂; T₃) in einer zweiten Betriebsart (B₂; B₂₀₀), die sich von der ersten Betriebsart (B₁) unterscheidet.

## Beschreibung

Die vorliegende Erfindung bezieht sich auf eine Widerstandsschweißvorrichtung und ein Widerstandsschweißverfahren zum Widerstandsschweißen von mindestens einem Bauteil.

Widerstandsschweißen von verschiedenen Blechkombinationen wird beispielsweise in der automatisierten Fahrzeugfertigung eingesetzt, bei welcher Schweißvorrichtungen Schweißverbindungen an beispielsweise einer Karosserie eines Fahrzeugs, wie Kraftfahrzeug, Lastkraftwagen, Flugzeug, usw., herstellen. Hier, wie auch in anderen Fertigungsanlagen, wie beispielsweise Fertigungsstraßen für Möbel, Heizkörper, usw., werden metallische Teile durch Schweißen mit Hilfe eines Schweißwerkzeugs der Schweißvorrichtung verbunden.

Zudem kann eine Widerstandsschweißvorrichtung auch in der Einzelfertigung zum Einsatz kommen.

Durch den Gleichstrom beim Schweißen können Magnetisierungseffekte der geschweißten Teile bzw. Bauteile auftreten. In Folge dessen wird die Weiterverarbeitung der geschweißten metallischen Bauteile erschwert. Durch die mögliche Magnetisierung von Anlagenteilen kann es zu Verschmutzung und Fehlfunktionen in der Schweißanlage kommen.

Zur Schweißung von Aluminium ist es erforderlich, die jeweiligen Aluminiumoxydschichten zu durchbrechen, die sich an der Oberfläche eines Aluminiumbauteils bilden. Dies ist mit herkömmlichen Widerstandsschweißvorrichtungen nicht so schnell ausführbar, dass die Forderung nach immer kürzeren Taktzeiten einer automatisierten Fertigung erfüllbar ist.

Ein weiteres Problem ergibt sich, wenn Blechkombinationen aus Blechen mit unterschiedlichen Materialstärken, beispielsweise Dick/Dünn, geschweißt werden sollen. Hierbei ist zu beachten, dass eine Schweißzange zum Schweißen immer in der Richtung an die Blechkombination gehalten wird, dass an dem dickeren Blech die sich stärker erwärmende Elektrode angesetzt wird. Die sich stärker erwärmende Elektrode entspricht dem Pluspol. Somit ist die Positionierung der Schweißzange an Bauteilen für nacheinander auszuführende Schweißverbindungen häufig zeitlich aufwändig.

Zur Einhaltung der geforderten Taktzeiten werden daher oft zwei Roboter eingesetzt, die jeweils eine Schweißzange führen. Dies erhöht den Platzbedarf und die Bereitstell- und Betriebskosten der Widerstandsschweißvorrichtung.

Außerdem kann es beim Schweißen von Aluminium schweißstromrichtungsabhängig zu unerwünschtem Abbrand an den Schweißelektroden bzw. Materialwanderung kommen. Gründe dafür sind verschiedene Legierungen für die geschweißten Bleche und/oder verschiedene Blechdickenkombinationen und/oder der Peltiereffekt

Diese Effekte treten zudem insbesondere beim Widerstandsschweißen von Kettengliedern und beim Schweißen von Heizkörpern auf.

Daher ist es Aufgabe der vorliegenden Erfindung, eine Widerstandsschweißvorrichtung und ein Widerstandsschweißverfahren zum Widerstandsschweißen von mindestens einem Bauteil bereitzustellen, mit welchen die zuvor genannten Probleme gelöst werden können. Insbesondere sollen eine Widerstandsschweißvorrichtung und ein Widerstandsschweißverfahren zum Widerstandsschweißen von mindestens einem Bauteil bereitgestellt werden, bei welchen die Taktzeiten für ein Schweißen bei einer automatisierten Fertigung bei hoher Qualität und geringen Kosten der Fertigung reduziert werden können.

Diese Aufgabe wird durch eine Widerstandsschweißvorrichtung zum Widerstandsschweißen von mindestens einem Bauteil nach Anspruch 1 gelöst. Die Widerstandsschweißvorrichtung hat ein Schweißwerkzeug mit mindestens einer Schweißelektrode, welche zum Schweißen mit dem mindestens einen Bauteil zu kontaktieren ist, mindestens einen Schweißtransformator zum Zuführen eines elektrischen Schweißstroms zu dem Schweißwerkzeug beim Schweißen des mindestens einen Bauteils, eine Reihenschaltung aus zwei Transistoren, die zwischen das Schweißwerkzeug und einen Ausgang des Schweißtransformators geschaltet sind, wobei die Polarität des einen Transistors der Reihenschaltung gegenüber der Polarität des anderen Transistors der Reihenschaltung gedreht ist, einer Steuereinrichtung zum Schalten der Reihenschaltung aus zwei Transistoren während einer umrichtergesteuerten Schweißzeit in einer ersten Betriebsart und zum Schalten der Reihenschaltung aus zwei Transistoren, am Ende der umrichtergesteuerten Schweißzeit für eine vorbestimmte Zeitdauer in einer zweiten Betriebsart, die sich von der ersten Betriebsart unterscheidet.

Mit der Widerstandsschweißvorrichtung ist ein schnelleres Stromabschalten nach dem Schweißvorgang möglich als bei herkömmlichen Widerstandsschweißvorrichtungen. Dadurch kann die Zeit zum Herstellen einer Schweißverbindung deutlich gesenkt werden. Als Folge davon sind die vorgegebenen Taktzeiten auch einhaltbar, falls nur ein einziger Schweißroboter zum Einsatz kommt. Dadurch ergeben sich große Vorteile in Bezug auf den Platzbedarf und die Bereitstell- und Betriebskosten der Widerstandsschweißvorrichtung.

Bei der Widerstandsschweißvorrichtung kann zudem eine einfache Polaritätsumschaltung des Transformators in kleiner Baugröße und mit geringen Verlusten realisiert sein, wenn der Transformator vorzugsweise als Mittelfrequenz-Gleichstrom-Transformator (MF-DC-Transformator) ausgeführt ist. Ein solcher Transformator wird auch als Transformator-Gleichrichtereinheit bezeichnet. Durch die Polaritätsumschaltung kann mit der beschriebenen Widerstandsschweißvorrichtung der bei einem herkömmlichen Diodengleichrichter entstehende störende Magnetisierungseffekt sehr effizient, einfach und kostengünstig vermieden werden. Zudem ist ein gleichmäßiges Anlegieren der Elektrodenkappen der Widerstandsschweißvorrichtung erreichbar.

Die Ausführung der Gleichrichterschaltung mit vier Transistoren, wie nachfolgend genauer beschrieben, hat Vorteile in Bezug auf den benötigten Platzbedarf und in Bezug von entstehenden Verlusten im Vergleich zu einer Lösung mit vier Thyristoren oder einem Diodengleichrichter. Hierbei benötigt die Lösung mit vier Thyristoren im Vergleich zu einem Diodengleichrichter den doppelten Bauraum. Dadurch ist die Gleichrichterschaltung der hier beschriebenen Widerstandsschweißvorrichtung deutlich handlicher und effizienter in der Handhabung als ein Gleichrichter mit vier Thyristoren oder gar ein Diodengleichrichter.

Somit bietet die in den Ansprüchen beanspruchte Widerstandsschweißvorrichtung aufgrund der oft vorherrschenden beengten Platzverhältnisse und aus Kostengründen eine sehr vorteilhafte Lösung.

Die in den Ansprüchen beanspruchte Widerstandsschweißvorrichtung hat geringere Verluste und einen kleineren Bauraum jedoch eine höhere Leistung als die zuvor beschriebene Thyristor-Lösung. Außerdem hat die in den Ansprüchen beanspruchte Widerstandsschweißvorrichtung eine ähnliche Leistungsfähigkeit und ähnlichen Bauraum jedoch geringere Verluste als ein MF-DC-Transformator mit einem Diodengleichrichter nach dem Stand der Technik. Diese Eigenschaften sind im Hinblick auf den schonenden Einsatz von Ressourcen ein großer Pluspunkt. Zudem verursachen die verbesserten Betriebseigenschaften für den Betreiber der Widerstandsschweißvorrichtung geringere Kosten.

Insgesamt kann mit der in den Ansprüchen beanspruchten Widerstandsschweißvorrichtung eine unaufwändige Polaritätsumschaltung eines Schweißtransformators schnell sowie in kleiner Baugröße und mit geringen Verlusten realisiert werden und der Schweißstrom klingt schneller als bisher ab.

Vorteilhafte weitere Ausgestaltungen der Widerstandsschweißvorrichtung sind in den abhängigen Ansprüchen angegeben.

Denkbar ist, dass die erste Betriebsart an dem Schweißtransformator eine polaritätsumschaltbare Schweißspannung und einen polaritätsumschaltbaren Schweißstrom realisiert, wobei die zweite Betriebsart ein Stromabklingen des Schweißstroms beschleunigt, der in der ersten Betriebsart erzeugt wurde.

Gemäß einem Ausführungsbeispiel kann die Steuereinrichtung ausgestaltet sein, in der zweiten Betriebsart den in Reihe geschalteten Transistor der Reihenschaltung aus einem Synchronbetrieb mit dem ersten Transistor der Reihenschaltung herauszunehmen. Alternativ kann die Steuereinrichtung ausgestaltet sein, den Schweißstrom in der zweiten Betriebsart kontrolliert über eine Reihenschaltung aus Transistoren in einem ersten Sekundärzweig des Transformators und einer Reihenschaltung aus Transistoren in einem zweiten Sekundärzweig des Transformators abwechselnd hin und her zu schalten.

In einer Ausgestaltung ist der Transistor mit der gedrehten Polarität mit dem Schweißwerkzeug verbunden.

In einer weiteren Ausgestaltung hat der Schweißtransformator zwei Ausgänge, an welchen jeweils eine Reihenschaltung aus zwei Transistoren vor das Schweißwerkzeug geschaltet ist.

Möglicherweise sind die zwei Transistoren Metall-Oxid-Halbleiter-Feldeffekttransistoren.

Die Steuereinrichtung kann ausgestaltet sein, in der ersten Betriebsart den in Reihe geschalteten Transistor im Synchronbetrieb negativ leitend einzuschalten.

In einer möglichen Ausgestaltung ist das Schweißwerkzeug eine Schweißzange mit zwei Schweißelektroden, zwischen welchen das mindestens eine Bauteil beim Schweißen angeordnet ist.

Die zuvor beschriebene Widerstandsschweißvorrichtung kann Teil einer Anlage sein, die zur Behandlung von Gegenständen vorgesehen ist. Hierbei kann die Widerstandsschweißvorrichtung zum Widerstandsschweißen von mindestens einem Bauteil für mindestens einen der Gegenstände vorgesehen sein. Zusätzlich oder alternativ ist die Anlage zur Fertigung von Fahrzeugrohkarossen oder Heizkörpern oder Ketten als Gegenstände ausgestaltet. Zusätzlich oder alternativ ist die Anlage zur Fertigung von Gegenständen aus mindestens einem Bauteil aus Aluminium ausgestaltet.

Die Aufgabe wird zudem durch ein Widerstandsschweißverfahren zum Widerstandsschweißen von mindestens einem Bauteil nach Anspruch 11 gelöst. Hierbei findet eine Widerstandsschweißvorrichtung Verwendung, die ein Schweißwerkzeug mit mindestens einer Schweißelektrode aufweist, welche zum Schweißen mit dem mindestens einen Bauteil zu kontaktieren ist. Zudem hat das Schweißwerkzeug mindestens einen Schweißtransformator zum Zuführen eines elektrischen Schweißstroms zu dem Schweißwerkzeug beim Schweißen des mindestens einen Bauteils, und eine Reihenschaltung aus zwei Transistoren. Die Reihenschaltung ist zwischen das Schweißwerkzeug und einen Ausgang des Schweißtransformators geschaltet, wobei die Polarität des einen Transistors der Reihenschaltung gegenüber der Polarität des anderen Transistors der Reihenschaltung gedreht ist. Hierbei hat das Widerstandsschweißverfahren die Schritte, Schalten, mit einer Steuereinrichtung, der Reihenschaltung aus zwei Transistoren während einer umrichtergesteuerten Schweißzeit in einer ersten Betriebsart und Schalten, mit einer Steuereinrichtung, der Reihenschaltung aus zwei Transistoren, am Ende der umrichtergesteuerten Schweißzeit für eine vorbestimmte Zeitdauer in einer zweiten Betriebsart, die sich von der ersten Betriebsart unterscheidet.

Das Widerstandsschweißverfahren erzielt die gleichen Vorteile, wie sie zuvor in Bezug auf die Widerstandsschweißvorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Anlage mit einer Widerstandsschweißvorrichtung gemäß einem ersten Ausführungsbeispiel;
Fig. 2 ein Zeitverlaufsdiagramm eines Schweißstroms, der beim Schweißen mit der Widerstandsschweißvorrichtung gemäß einem ersten Ausführungsbeispiel erzeugt wird und der nach dem Schweißvorgang abklingt, im Vergleich zu einem Verlauf eines Schweißstroms bei einer herkömmlichen Betriebsart der Widerstandsschweißvorrichtung;
Fig. 3 ein Zeitverlaufsdiagramm eines Schweißstroms, der beim Schweißen mit der Widerstandsschweißvorrichtung gemäß einem zweiten Ausführungsbeispiel erzeugt wird und der nach dem Schweißvorgang abklingt, im Vergleich zu den Verläufen von Fig. 2; und
Fig. 4 ein Blockschaltbild einer Anlage mit einer Widerstandsschweißvorrichtung gemäß einem dritten Ausführungsbeispiel.

In den Figuren sind gleiche oder funktionsgleiche Elemente, sofern nichts anderes angegeben ist, mit denselben Bezugszeichen versehen.

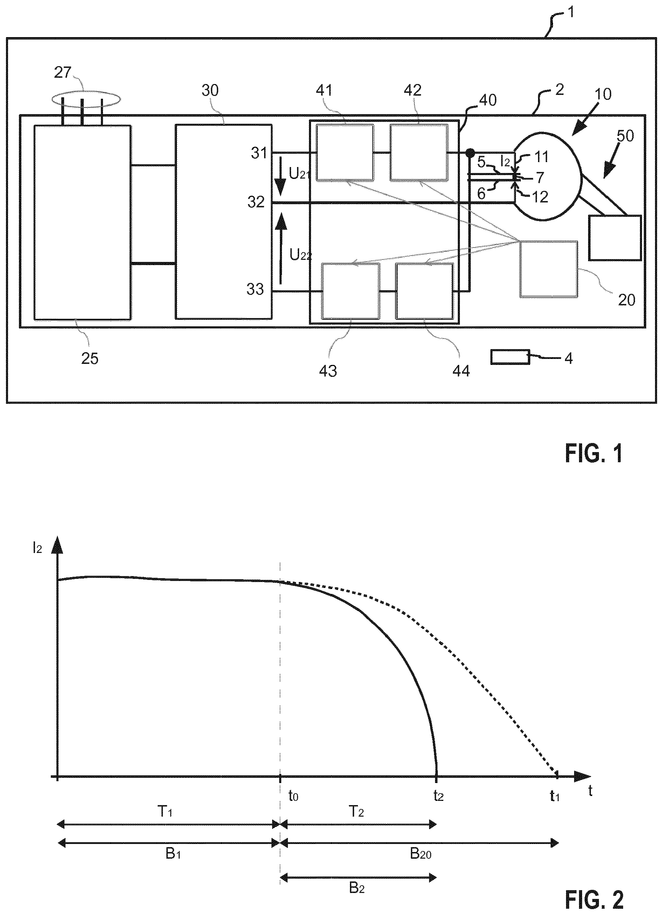

Fig. 1 zeigt sehr schematisch eine Anlage 1 mit einer Widerstandsschweißvorrichtung 2. Die Anlage 1 kann beispielsweise eine Fertigungsanlage für Gegenstände 4, wie Fahrzeuge, Möbel, Heizkörper, usw. sein.

In der Fertigungsanlage 1 können metallische Bauteile 5, 6 durch Widerstandsschweißen derart verbunden werden, dass eine Schweißverbindung 7 hergestellt wird. Hierzu weist die Widerstandsschweißvorrichtung 2 ein Schweißwerkzeug 10 in Form einer Schweißzange, eine Steuereinrichtung 20, einen Umrichter 25, einen Schweißtransformator 30 mit drei Ausgängen 31, 32, 33, eine Gleichrichterschaltung 40 sowie eine Vorrichtung 50 zum Führen des Schweißwerkzeugs 10 auf. Der Umrichter 25 wird von einem Energieversorgungsnetz 27 mit elektrischer Energie versorgt.

Das Schweißwerkzeug 10 hat bei dem Beispiel von Fig. 1 zwei Schweißelektroden 11, 12. Die Gleichrichterschaltung 40 hat einen ersten Transistor 41, einen zweiten Transistor 42, einen dritten Transistor 43, und einen vierten Transistor 44.

Die Widerstandsschweißvorrichtung 2 kann unter Steuerung der Steuereinrichtung 20 mit dem Schweißwerkzeug 10 eine Schweißverbindung 7 herstellen. Hierfür ist mindestens eines der Bauteile 5, 6 zwischen den beiden Schweißelektroden 11, 12 angeordnet, wie zuvor beschrieben und wie beispielsweise in Fig. 1 gezeigt. Hierbei ist es insbesondere möglich, dass die Bauteile 5, 6 spezielle Kombinationen, insbesondere Blechkombinationen, aufweisen. Eine solche spezielle Kombination ist insbesondere eine Kombination aus Blechen mit unterschiedlichen Materialstärken, eine Kombination von speziellen Formen der Bauteile, eine Kombination mit einem Aluminiumbauteil und/oder Aluminiumblech, usw. Zur Schweißung von Aluminium wird die Widerstandsschweißvorrichtung 2 mit Hilfe der Steuereinrichtung 20 derart betrieben, dass die jeweilige(n) Aluminiumoxydschicht an der relevanten Oberfläche des Aluminiumbauteils durchbrochen wird. Dies wird nachfolgend noch genauer beschrieben.

Es ist alternativ möglich, dass beispielsweise zwei Kanten eines einzigen Bauteils 5 durch Widerstandsschweißen mit einer oder mehreren Schweißverbindungen 7 miteinander verbunden werden. Unabhängig davon, wie viele Bauteile 5, 6 mit einer Schweißverbindung 7 miteinander verbunden werden, kann/können die Schweißverbindung(en) 7 eine Punktschweißung oder eine Schweißnaht oder Kombinationen daraus sein.

Zum Schweißen liegt bei der Widerstandsschweißvorrichtung 2 an der Sekundärseite des Schweißtransformators 30 eine erste Sekundärspannung U₂₁ zwischen dem ersten und zweiten Ausgang 31, 32 des Schweißtransformators 30 an. Außerdem liegt eine zweite Sekundärspannung U₂₂ zwischen dem zweiten und dritten Ausgang 32, 33 des Schweißtransformators 30 an. Die erste Sekundärspannung U₂₁ und die zweite Sekundärspannung U₂₂ bilden eine Schweißspannung U₂₁, U₂₂, welche einen Schweißstrom I₂ zur Folge hat.

An dem ersten Ausgang 31 des Schweißtransformators 30 ist der erste Transistor 41 angeschlossen. Zu dem ersten Transistor 41 ist ein zweiter Transistor 42 in Reihe geschaltet. Dadurch ist die Reihenschaltung aus erstem und zweitem Transistor 41, 42 zwischen den Schweißtransformator 30 und das Schweißwerkzeug 10 geschaltet. Genauer gesagt, ist die Reihenschaltung aus erstem und zweitem Transistor 41, 42 zwischen den Schweißtransformator 30 und die erste Schweißelektrode 11 geschaltet.

Mit dem zweiten Ausgang 32 des Schweißtransformators 30 ist die zweite Schweißelektrode 12 direkt verbunden.

An dem dritten Ausgang 33 des Schweißtransformators 30 ist der dritte Transistor 43 angeschlossen. Zu dem dritten Transistor 43 ist ein vierter Transistor 44 in Reihe geschaltet. Dadurch ist die Reihenschaltung aus drittem und viertem Transistor 43, 44 zwischen den Schweißtransformator 30 und das Schweißwerkzeug 10 geschaltet. Genauer gesagt, ist die Reihenschaltung aus drittem und viertem Transistor 43, 44 zwischen den Schweißtransformator 30 und die erste Schweißelektrode 11 geschaltet.

Die Steuereinrichtung 20 unterscheidet zwei Betriebsarten B₁, B₂ bzw. B₁, B₂₀ für eine Steuerung der Transistoren 41 bis 44. Der Effekt der Betriebsarten B₁, B₂ sowie der Betriebsarten B₁, B₂₀ auf den Schweißstrom I₂ ist in Fig. 2 veranschaulicht.

Für eine erste Betriebsart B₁, bei welcher das Schweißen bzw. das Herstellen einer Schweißverbindung 7 ausgeführt wird, wird aktiv Energie von der Primärseite des Schweißtransformators 30 auf die Sekundärseite des Schweißtransformators 30 übertragen, um den Schweißgleichstrom, mit anderen Worten den Schweißstrom I₂, zu erzeugen. Für eine solche Energieübertragung von der Primärseite auf die Sekundärseite des Schweißtransformators 30 ist die Steuereinrichtung 20 ausgestaltet, die Polarität der Transistoren 41, 42, 43, 44 wie gewünscht zu schalten. Hierfür ist die Steuereinrichtung 20 ausgestaltet, jeweils in Abhängigkeit der Ausgangsspannung des Schweißtransformators 30 und der Polaritätsvorwahl einen Transistor der Transistoren 41, 42, 43, 44 einzuschalten. Der in Reihe geschaltete Transistor der Transistoren 41, 42, 43, 44 wird im Synchronbetrieb bei Strom dann negativ leitend eingeschaltet.

Beispielsweise schaltet die Steuereinrichtung 20 den ersten Transistor 41 jeweils in Abhängigkeit der Ausgangsspannung und der Polaritätsvorwahl ein. Der in Reihe geschaltete zweite Transistor 42 wird im Synchronbetrieb bei Erzeugung des Schweißstroms I2 dann negativ leitend eingeschaltet.

Dadurch sind pro Gleichrichterzweig der Gleichrichterschaltung 40 dann zwei Transistoren, nämlich bei dem Beispiel die Transistoren 41, 42, in Reihe eingeschaltet. Dasselbe gilt in gleicher Weise für die Reihenschaltung aus drittem und viertem Transistor 43, 44 als weiteren Gleichrichtzweig der Gleichrichterschaltung 40.

Auf diese Weise kann an dem Schweißtransformator 30 eine polaritätsumschaltbare Schweißspannung U₂₁, U₂₂ und ein polaritätsumschaltbarer Schweißstrom I₂ realisiert werden.

Dadurch wird eine wechselbare Polarität des Schweißtransformators 30 und Stromrichtung des Schweißstroms I₂ realisiert. In Folge dessen sind die zuvor beschriebenen Magnetisierungseffekte vermeidbar. Außerdem kann bei einem Bauteil 5, 6 mit einer Aluminiumschicht die Aluminiumoxydschicht prozesssicher aufgebrochen werden.

Nach einem Zeitpunkt t₀, welcher dem Ende der Schweißzeit T₁ entspricht, in welcher ein Schweißvorgang ausgeführt wird, wechselt die Steuereinrichtung 20 in eine zweite Betriebsart B₂. In der zweiten Betriebsart B₂ führt die Steuereinrichtung 20 einen aktiven Wechsel der Gleichrichtbetriebsart sekundärseitig aus, wie nachfolgend beschrieben.

Für die zweite Betriebsart B₂, steuert die Steuereinrichtung 20 die Transistoren 41 bis 44, um ein schnelles Stromabklingen des Schweißstroms I₂ zu erreichen, wie mit Hilfe von Fig. 2 veranschaulicht.

In Fig. 2 ist mit einer gestrichelten Kurve über der Zeit t der Verlauf des Schweißstroms I₂ veranschaulicht, der sich bei einer Standardgleichrichtung mit nicht dargestellten Dioden einstellt. Bei einer derartigen Standardgleichrichtung wird die Energie aus dem Sekundärkreis des Schweißtransformators 30 nach dem Ende der Schweißzeit T₁ über ohmsche Verluste der Dioden abgebaut. Hierbei ist der Schweißstrom I₂ zu einem Zeitpunkt t₁ abgeklungen.

Im Gegensatz dazu wird bei dem vorliegenden Ausführungsbeispiel in der zweiten Betriebsart B₂ für die Steuerung der Transistoren 41 bis 44 am Ende der normalen umrichtergesteuerten Schweißzeit T₁ der Stromabfall bzw. das Stromabklingen des Schweißstroms I₂ beschleunigt. Hierfür werden die relevanten Transistoren 42 bzw. 44, deren pn-Übergänge jeweils zwei gegeneinander geschalteten Dioden entsprechen, aus dem Synchronbetrieb herausgenommen und der abfallende Schweißstrom I₂ stattdessen über parallele Dioden der Transistoren 42 bzw. 44 geführt.

Als Folge davon ist der Schweißstrom I₂ bereits bei einem Zeitpunkt t₂ bzw. nach einer Zeitdauer T2 abgeklungen und nicht wie bisher erst nach der Zeit t₁, wie in Fig. 2 veranschaulicht.

Somit schaltet die Steuereinrichtung 20 die Reihenschaltung aus zwei Transistoren 41, 42 bzw. 43, 44, am Ende der umrichtergesteuerten Schweißzeit T₁ für eine vorbestimmte Zeitdauer T₂ = t₂ - t₀ in der zweiten Betriebsart B₂. Die erste und zweite Betriebsart B₁, B₂ unterscheiden sich folglich voneinander.

Infolgedessen wird in der zweiten Betriebsart B₂ durch erzwungenen Wechsel der Gleichrichterzweige zusätzlich Energie durch den sekundärseitigen Stromwechsel in den Gleichrichterzweigen erzeugt, woraus jeweils eine Ummagnetisierung des Schweißtransformators 30 auf der Sekundärseite des Schweißtransformators 30 folgt. Dadurch entstehen Magnetisierungsverluste auf der Sekundärseite des Schweißtransformators 30, welche die Energie des Sekundärkreises mit abbauen und so zu einem schnelleren Abklingen des Schweißstroms I₂ führen.

Die Steuereinrichtung 20 ist also für einen sekundärseitigen aktiven Wechsel der Gleichrichtbetriebsart ausgestaltet, welcher Wechsel Magnetisierungsverluste auf der Sekundärseite des Schweißtransformators 30 zur Folge hat.

Die Widerstandsschweißvorrichtung 2 kann besonders vorteilhaft bei Blechkombinationen zum Einsatz kommen, bei welchen es bei einer Schweißzange zum unerwünschtem Abbrand der Schweißelektroden 11, 12 oder Materialwanderung kommt und/oder beim Schweißen von Aluminium und/oder wo schnelle Taktzeiten beim Einsatz der Vorrichtung 2 gefordert werden. Zusätzlich oder alternativ kann die Widerstandsschweißvorrichtung 2 besonders vorteilhaft beim Schweißen von Kettengliedern und beim Schweißen von Heizkörpern verwendet werden.

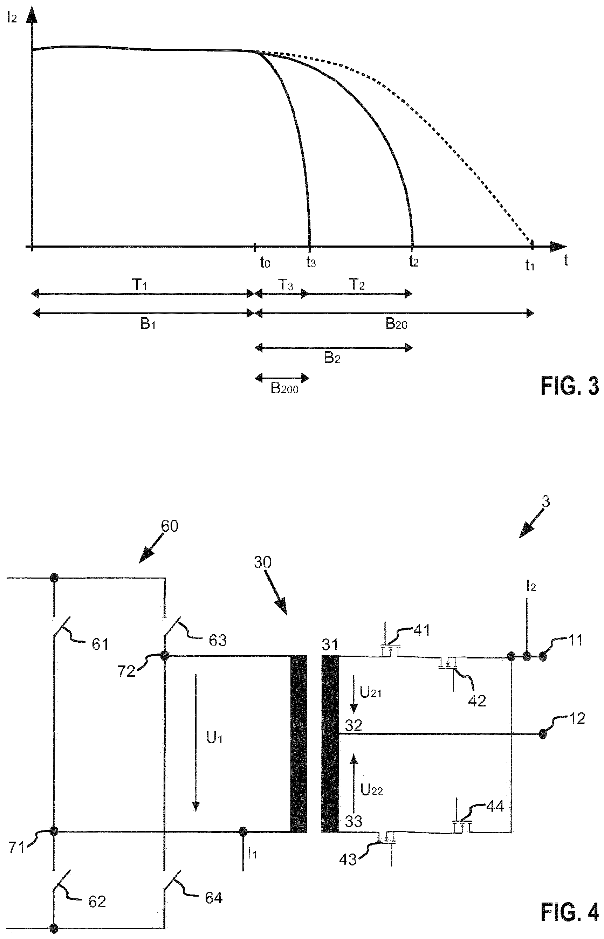

Wie in Fig. 3 veranschaulicht, ist die Steuereinrichtung 20 gemäß einem zweiten Ausführungsbeispiel zum Durchführen einer zweiten Betriebsart B₂₀₀ ausgestaltet. Hierbei schaltet die Steuereinrichtung 20 den Schweißstrom I₂ in einer zweiten Betriebsart B₂₀₀ kontrolliert über die Transistoren 41 bis 44 in die beiden Sekundärzweige des Transformators 30 abwechselnd hin und her, um ein noch schnelleres Stromabklingen des Schweißstroms I₂ zu erreichen bzw. einen schnelleren Stromabfall des Schweißstroms I₂ zu erzeugen.

Hierbei kann in der zweiten Betriebsart B₂₀₀ der Wechsel auf Grund der höheren Primärspannung des Transformators 30 schneller erfolgen. Damit können mehr Magnetisierungsverluste erzeugt werden. Dadurch erfolgt das Abklingen des Schweißstroms I₂ hier bereits bei einem Zeitpunkt t₃, der zwischen dem Zeitpunkt t₀ und dem Zeitpunkt t₂ liegt. Somit klingt der Schweißstrom I₂ noch schneller ab als bei dem ersten Ausführungsbeispiel.

Auch auf diese Weise können die zuvor in Bezug auf das erste Ausführungsbeispiel genannten Vorteile erzielt werden.

Fig. 4 zeigt eine Widerstandsschweißvorrichtung 3 gemäß einem dritten Ausführungsbeispiel. Die Widerstandsschweißvorrichtung 3 ist in vielen Teilen auf die gleiche Weise aufgebaut, wie für die Widerstandsschweißvorrichtung 2 gemäß dem vorangehenden Ausführungsbeispiel beschrieben.

Im Unterschied zur Widerstandsschweißvorrichtung 2 gemäß dem vorangehenden Ausführungsbeispielen sind bei der Widerstandsschweißvorrichtung 3 gemäß dem vorliegenden Ausführungsbeispiel die Transistoren 41, 42, 43, 44 jeweils speziell als Metall-Oxid-Halbleiter-Feldeffekttransistoren (MOS-FET) ausgestaltet. Die Metall-Oxid-Halbleiter-Feldeffekttransistoren sind bei der Widerstandsschweißvorrichtung 3 antiparallel geschaltet.

Wie in Fig. 4 gezeigt, ergibt sich eine Primärspannung U₁ an der Primärseite des Schweißtransformators 30 aus einer Brückenschaltung 60 von Halbleiterschaltern 61, 62, 63, 64. Die Halbleiterschalter 61, 62, 63, 64 können insbesondere jeweils ein Bipolartransistor mit isolierter Gate-Elektrode (IGBT = Insulated-Gate Bipolar Transistor) des Umrichters 25 sein.

In der Schaltung 60 sind der erste Halbleiterschalter 61 und der zweite Halbleiterschalter 62 in Reihe geschaltet. Zudem sind der dritte Halbleiterschalter 63 und der vierte Halbleiterschalter 64 in Reihe geschaltet. Zwischen einem ersten Verbindungsknoten 71, der zwischen dem ersten und zweiten Halbleiterschalter 61, 62 angeordnet ist, und einem zweiten Verbindungsknoten 72, der zwischen dem dritten und vierten Halbleiterschalter 63, 64 angeordnet ist, bildet sich die Primärspannung U₁ an der Primärseite des Schweißtransformators 30 aus.

An der Sekundärseite des Schweißtransformators 30 liegt eine erste Sekundärspannung U₂₁ zwischen dem ersten und zweiten Ausgang 31, 32 des Schweißtransformators 30 an. Außerdem liegt eine zweite Sekundärspannung U₂₂ zwischen dem zweiten und dritten Ausgang 32, 33 des Schweißtransformators 30 an. Die erste Sekundärspannung U₂₁ und die zweite Sekundärspannung U₂₂ bilden die Schweißspannung U₂₁, U₂₂.

Der Schweißtransformator 30 wandelt die Primärspannung U₁ in die erste und zweite Sekundärspannung U₂₁, U₂₂. Hierbei ist die Summe der Sekundärspannungen U₂₁, U₂₂ kleiner als der Wert der Primärspannung U₁. Zudem wandelt der Schweißtransformator 30 einen Primärstrom I₁ auf der Primärseite des Schweißtransformators 30 in den Sekundärstrom I₂ auf der Sekundärseite des Schweißtransformators 30 um. Der Sekundärstrom I₂, der auch als Schweißstrom bezeichnet werden kann, hat einen höheren Wert als der Primärstrom I₁.

Die in Fig. 4 gezeigte Schaltung der Widerstandsschweißvorrichtung 3 ist von der Steuereinrichtung 20 gemäß einer Art und Weise schaltbar, wie in Bezug auf eines der vorangehenden Ausführungsbeispiele beschrieben.

Die Widerstandsschweißvorrichtung 3 kann anstelle der Widerstandsschweißvorrichtung 2 gemäß einem der vorangehenden Ausführungsbeispiele bei der Anlage 1 gemäß den vorangehenden Ausführungsbeispielen eingesetzt werden.

Auch die Widerstandsschweißvorrichtung 3 kann besonders vorteilhaft bei Blechkombinationen zum Einsatz kommen, bei welchen es bei einer Schweißzange als Schweißwerkzeug 10 zum unterschiedlich hohen Abbrand der Schweißelektroden 11, 12 kommt. Außerdem kann die Widerstandsschweißvorrichtung 3 besonders vorteilhaft beim Schweißen von Kettengliedern und beim Schweißen von Heizkörpern verwendet werden.

Alle zuvor beschriebenen Ausgestaltungen der Anlage 1, der Widerstandsschweißvorrichtungen 2, 3, der Steuereinrichtung 20 und des Widerstandsschweißverfahrens können einzeln oder in allen möglichen Kombinationen Verwendung finden. Insbesondere ist es möglich, alle Merkmale und/oder Funktionen der zuvor beschriebenen Ausführungsbeispiele beliebig zu kombinieren. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Transistoren 41, 42, 43, 44 sind alternativ Bipolartransistoren, wobei jedoch die Ausführung als Metall-Oxid-Halbleiter-Feldeffekttransistoren (MOS-FET) bevorzugt wird.

Der Schweißtransformator 30 kann alternativ aus einer Parallelschaltung von zwei Transformatoren aufgebaut sein.

Möglicherweise kann die Steuereinrichtung 20 mehr als ein Schweißwerkzeug 10 zumindest teilweise gleichzeitig mit mindestens einem weiteren Schweißwerkzeug 10 steuern.

## Patentansprüche

1. Widerstandsschweißvorrichtung (2; 3) zum Widerstandsschweißen von mindestens einem Bauteil (5, 6), mit einem Schweißwerkzeug (10) mit mindestens einer Schweißelektrode (11, 12), welche zum Schweißen mit dem mindestens einen Bauteil (5, 6) zu kontaktieren ist, mindestens einem Schweißtransformator (30) zum Zuführen eines elektrischen Schweißstroms (I₂) zu dem Schweißwerkzeug (10) beim Schweißen des mindestens einen Bauteils (5, 6), einer Reihenschaltung aus zwei Transistoren (41, 42; 43, 44), die zwischen das Schweißwerkzeug (10) und einen Ausgang des Schweißtransformators (30) geschaltet sind, wobei die Polarität des einen Transistors (42; 44) der Reihenschaltung gegenüber der Polarität des anderen Transistors (41; 43) der Reihenschaltung gedreht ist, einer Steuereinrichtung (20) zum Schalten der Reihenschaltung aus zwei Transistoren (41, 42; 43, 44) während einer umrichtergesteuerten Schweißzeit (T₁) in einer ersten Betriebsart (B₁) und zum Schalten der Reihenschaltung aus zwei Transistoren (41, 42; 43, 44), am Ende der umrichtergesteuerten Schweißzeit (T₁) für eine vorbestimmte Zeitdauer (T₂; T₃) in einer zweiten Betriebsart (B₂; B₂₀₀) die sich von der ersten Betriebsart (B₁) unterscheidet.

2. Widerstandsschweißvorrichtung (2; 3) nach Anspruch 1, wobei die erste Betriebsart (B₁) an dem Schweißtransformator (30) eine polaritätsumschaltbare Schweißspannung (U₂₁, U₂₂) und einen polaritätsumschaltbaren Schweißstrom (I₂) realisiert, und wobei die zweite Betriebsart (B₂; B₂₀₀) ein Stromabklingen des Schweißstroms (I₂) beschleunigt, der in der ersten Betriebsart (B₁) erzeugt wurde.

3. Widerstandsschweißvorrichtung (2; 3) nach Anspruch 1 oder 2, wobei die Steuereinrichtung (20) ausgestaltet ist, in der zweiten Betriebsart (B₂) den in Reihe geschalteten Transistor (42; 44) der Reihenschaltung aus einem Synchronbetrieb mit dem ersten Transistor (41; 43) der Reihenschaltung herauszunehmen, oder wobei die Steuereinrichtung (20) ausgestaltet ist, den Schweißstrom (I₂) in der zweiten Betriebsart (B₂₀₀) kontrolliert über eine Reihenschaltung aus Transistoren (41, 42) in einem ersten Sekundärzweig des Transformators (30) und einer Reihenschaltung aus Transistoren (43, 44) in einem zweiten Sekundärzweig des Transformators (30) abwechselnd hin und her zu schalten.

4. Widerstandsschweißvorrichtung (2; 3) nach einem der vorangehenden Ansprüche, wobei der Transistor (42; 44) mit der gedrehten Polarität mit dem Schweißwerkzeug (10) verbunden ist.

5. Widerstandsschweißvorrichtung (2; 3) nach einem der vorangehenden Ansprüche, wobei der Schweißtransformator (30) zwei Ausgänge (31, 33) hat, an welchen jeweils eine Reihenschaltung aus zwei Transistoren (41, 42; 43, 44) vor das Schweißwerkzeug (10) geschaltet ist.

6. Widerstandsschweißvorrichtung (2; 3) nach einem der vorangehenden Ansprüche, wobei die zwei Transistoren (41, 42; 43, 44) Metall-Oxid-Halbleiter-Feldeffekttransistoren sind.

7. Widerstandsschweißvorrichtung (2; 3) nach einem der vorangehenden Ansprüche, wobei die Steuereinrichtung (20) ausgestaltet ist, in der ersten Betriebsart (B₁) den in Reihe geschalteten Transistor (41, 43) im Synchronbetrieb negativ leitend einzuschalten.

8. Widerstandsschweißvorrichtung (2; 3) nach einem der vorangehenden Ansprüche, wobei das Schweißwerkzeug (10) eine Schweißzange mit zwei Schweißelektroden (11, 12) ist, zwischen welchen das mindestens eine Bauteil (5, 6) beim Schweißen angeordnet ist.

9. Anlage (1) zur Behandlung von Gegenständen (4), mit einer Widerstandsschweißvorrichtung (2; 3) nach einem der vorangehenden Ansprüche, wobei die Widerstandsschweißvorrichtung (2; 3) zum Widerstandsschweißen von mindestens einem Bauteil (5, 6) für mindestens einen der Gegenstände (4) vorgesehen ist.

10. Anlage (1) nach Anspruch 9, wobei die Anlage (1) zur Fertigung von Fahrzeugrohkarossen oder Heizkörpern oder Ketten als Gegenstände (4) ausgestaltet ist, und/oder wobei die Anlage (1) zur Fertigung von Gegenständen (4) aus mindestens einem Bauteil (5, 6) aus Aluminium ausgestaltet ist.

11. Widerstandsschweißverfahren zum Widerstandsschweißen von mindestens einem Bauteil (5, 6) mit einer Widerstandsschweißvorrichtung (2; 3), die ein Schweißwerkzeug (10) mit mindestens einer Schweißelektrode (11, 12), welche zum Schweißen mit dem mindestens einen Bauteil (5, 6) zu kontaktieren ist, mindestens einen Schweißtransformator (30) zum Zuführen eines elektrischen Schweißstroms (I₂) zu dem Schweißwerkzeug (30) beim Schweißen des mindestens einen Bauteils (5, 6), und eine Reihenschaltung aus zwei Transistoren (41, 42; 43, 44) aufweist, die zwischen das Schweißwerkzeug (10) und einen Ausgang des Schweißtransformators (30) geschaltet sind, wobei die Polarität des einen Transistors (42; 44) der Reihenschaltung gegenüber der Polarität des anderen Transistors (41; 43) der Reihenschaltung gedreht ist, und wobei das Widerstandsschweißverfahren die Schritte aufweist Schalten, mit einer Steuereinrichtung (20), der Reihenschaltung aus zwei Transistoren (41, 42; 43, 44) während einer umrichtergesteuerten Schweißzeit (T₁) in einer ersten Betriebsart (B₁) und Schalten, mit einer Steuereinrichtung (20), der Reihenschaltung aus zwei Transistoren (41, 42; 43, 44), am Ende der umrichtergesteuerten Schweißzeit (T₁) für eine vorbestimmte Zeitdauer (T₂; T₃) in einer zweiten Betriebsart (B₂; B₂₀₀), die sich von der ersten Betriebsart (B₁) unterscheidet.
